# EUROPEAN PATENT APPLICATION

(11) **EP 2 083 555 A2**
(43) Date of publication of application: **29.07.2009**
(21) Application number: 09151049.5
(22) Date of filing: 21.01.2009
(51) Int. Cl.: H04M 1/03

(54) **Waterproofing method and structure for mobile phone**

(30) Priority: 28.01.2008 KR 20080008678; 08.08.2008 KR 20080078094
(71) Applicant: Tyco Electronics AMP Korea Limited, Kyungsangbuk-Do, 712-838 (KR)
(72) Inventor: Hong, Seung-Mo, 712-838, Kyungsan-Si (KR)
(74) Representative: Johnstone, Douglas Ian

(57) **Abstract**

A mobile phone casing including upper and lower casings (100A, 100B) and a connector assembly (1) for charging the mobile phone. The connector assembly includes a housing (11) in which a contact terminal (13A) and an earth terminal are insert-moulded. Inner and outer surfaces of an annular sealing member (14) respectively engage a connection groove (111) extending around the housing (11) and confronting airtight protrusion parts (4) of the upper and lower casings (100A, 100B). The mobile phone casing may comprise a casing body with a connector assembly insertion hole in a sidewall thereof and a cover. The connector assembly and a printed circuit board (2) are secured to the mobile phone casing such that the contact terminal (13A) and the earth terminal engage connection terminals (21A) of a printed circuit board connector (21) or traces on the printed circuit board. A method of assembling a mobile phone is also disclosed.

## Description

The present invention relates to a method and a structure for waterproofing a mobile phone, and more particularly to a waterproofing method and structure for a mobile phone, capable of preventing damage of an internal circuit mounted in a main body of the mobile phone caused by water ingress through a recharging connector in a situation in which the mobile phone is submerged in water.

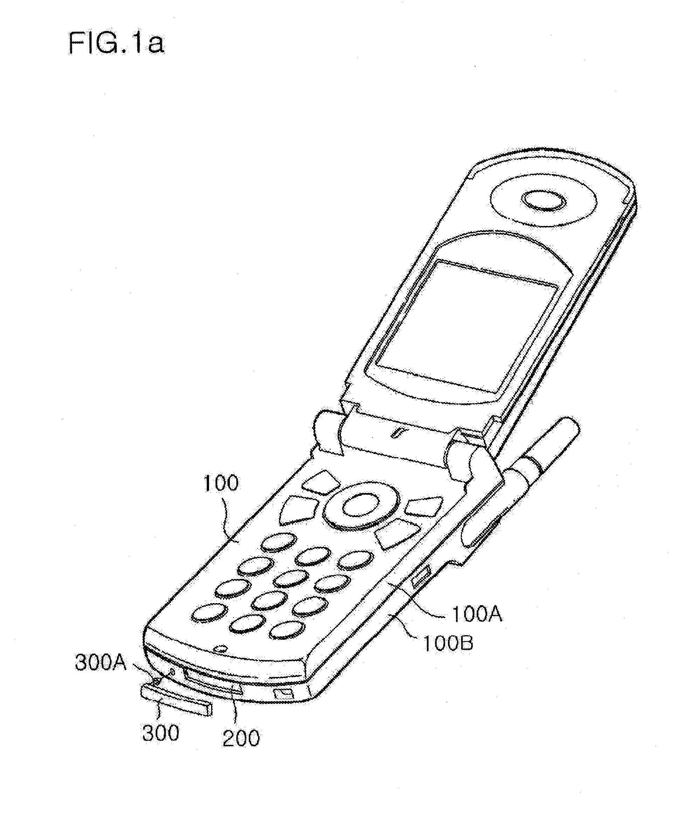

In general, as shown in FIG. 1a, a mobile phone includes a main body comprising upper and lower casings 100A and 100B which are separable, and a recharging connector 200 mounted on the main body. By having a cover 300, the recharging connector 200 is capable of preventing entry of water as well as dust and other foreign substances. Such a cover 300 is connected by a link shaft 300A made of an elastic material to the main body so as to not be separated from the main body even when the recharging connector is open. However, the cover 300 is provided mainly to exclude dust and does not have a waterproofing function. If the mobile phone is submerged in water, entry of water into the main body of the mobile phone is not effectively prevented even while the cover 300 is blocking the recharging connector 200. This seriously affects the performance of the mobile phone.

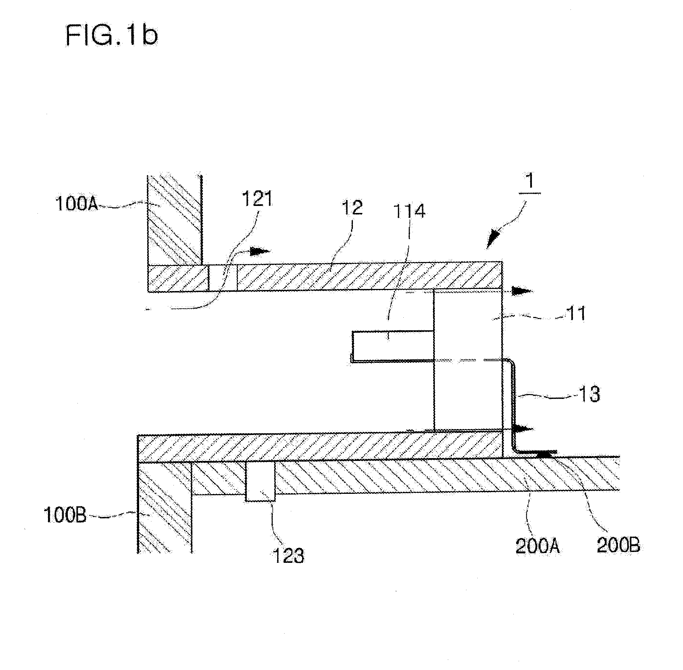

To be more specific, as shown in FIG. 1b, the recharging connector 200 comprises a housing 11 including a plurality of contact terminals 13 formed by insert injection molding and a metal shell 12 connected at the outside of the housing 11. These parts constitute a connector assembly 1. The shell 12 includes a pair of fixing holes 121 at an upper part thereof in order for engagement with hooks of the recharging connector 200. An earth terminal 123 and the contact terminals 13 of the shell 12 are electrically connected to a printed circuit board (PCB) 200A by soldering. Upper parts of the contact terminals 13 are supported by a supporting protrusion 114 projecting from the front of the housing 11.

While a leading end of the contact terminal 13 is inclined upwardly, a rear end of a horizontally extended part of the contact terminal 13 is bent downwardly perpendicularly to be soldered to the PCB 200A. Here, the soldering is performed using a surface mount device (SMD).

With SMD soldering, a solder paste 200B comprising small gel particles is interposed between patterns formed on the PCB 200A and the contact terminals 13, and then heat is applied in a chamber to melt the solder paste 200B such that the patterns and the contact terminals are soldered to each other. The solder paste 200B can be attached to the PCB patterns and the contact terminals 13 by having a predetermined viscosity.

More specifically, according to SMD soldering, the recharging connector 200 is constituted in such a manner that the connector assembly 1 is first placed on the PCB 200A and the earth terminal 123 of the shell 12 is soldered to the PCB 200A. Next, the solder paste 200B is interposed between pattern-type connection terminals (not shown) formed at the PCB 200A and the contact terminals 13 constituting the connector assembly 1, and then heated in the chamber. Accordingly, the solder paste 200B is melted between the connection terminals and the contact terminals 13, thus accomplishing the soldering.

The above-described recharging connector 200 of a mobile phone has a problem in that water can infiltrate through gaps between the shell 12 and the upper and lower casings 100A and 100B as indicated by arrows in FIG. 1b, and also through the fixing holes 121 formed at the upper part of the shell 12 and through gaps between the housing 11 and the shell 12. When water reaches the PCB 200A, the operation of the mobile phone is seriously affected.

In order to prevent such damage to the mobile phone by the entry of water, a sealing member made of rubber may be employed. However, the sealing member may be deformed or damaged during assembling of the mobile phone.

When electrically connecting the contact terminals 13 of the connector assembly 1 to the PCB 200A, by SMD soldering, the rubber sealing mounted to the connector assembly 1 may be deformed or damaged by heat. Thus, the rubber sealing is improper for practical use.

The shell 12 has an earthing function to interrupt electromagnetic waves generated from the inside and outside thereof. Therefore, the earth terminal 123 disposed at the lower part of the shell 12 and soldered to the PCB 200A is an essential element for earthing and fixing of the shell 12. Nevertheless, the earth terminal 123 becomes a hindrance to waterproofing of the recharging connector 200.

Usually, water enters into the main body of the mobile phone through the fixing holes 121 formed at the upper part of the shell 12. To this end, when the sealing member is applied, it is disposed behind the fixing holes 121 of the shell 12. With such an arrangement, however, since the earth terminal 123 of the shell 12 electrically connected to the PCB 200A is disposed ahead of the sealing member, the circuit structure can be seriously damaged through the earth terminal 123 in spite of provision of the sealing member.

Furthermore, since a lower surface of the shell is in contact with the earth terminal through the whole length thereof, water may enter through the contacting area in spite of application of the sealing member. Thus, the actual waterproofing effect is not achieved effectively.

Therefore, the present invention has been made in view of the above problems, and it is a preferred object of the present invention to provide a method and a structure for waterproofing a mobile phone, capable of preventing damage by water to an internal circuit mounted in a main body of the mobile phone in situations in which the mobile phone is submerged in water by providing a mobile phone with a waterproof function.

It is another preferred object of the present invention to provide waterproofing method and structure for a mobile phone, capable of preventing a waterproof sealing function of a rubber material mounted to the recharging connector from being deteriorated by heat generated when soldering a contact terminal to a printed circuit board (PCB), by enabling connection of the contact terminal constituting the recharging connector to the PCB without requiring a soldering process.

It is still another preferred object of the present invention to provide a waterproofing method and structure for a mobile phone, capable of improving close connection between the contact terminal of the recharging connector and the PCB even when a connection terminal of the PCB is formed simply as a pattern on the PCB rather than as a separate part.

It is still another preferred object of the present invention to provide a waterproofing method and structure for a mobile phone, in which the recharging connector, in the form of a connector assembly, can be guided to a mounting position relative to the PCB in a sliding manner.

In addition, it is still another preferred object of the present invention to provide a waterproofing method and structure for the mobile phone, capable of preventing loss of the waterproof function of a sealing member, hitherto caused when the earth terminal of the shell is disposed ahead of the sealing member.

It is still another preferred object of the present invention to provide waterproofing method and structure for a mobile phone, capable of preventing entry of water through gaps between upper and lower casings of the main body, which are separably formed.

It is still another preferred object of the present invention to provide a waterproofing method and structure for a mobile phone, capable of connecting the PCB to a housing without bolts so that a waterproofing effect between the housing and the sealing member can be achieved.

In accordance with the present invention, at least some of the above other objects can be accomplished by the provision of a waterproofing method for a mobile phone, including a first process of constructing a connector assembly, by inserting a sealing member including a groove formed along an outer circumference thereof, in an outside of a housing that includes a shell connected at the front thereof and a contact terminal and an earth terminal insert-molded therein; a second process of fastening a printed circuit board (PCB) equipped with a PCB connector at an upper surface thereof to a lower casing by bolts; a third process of inserting a protrusion part of the lower casing, being formed in a connector mounting part of a main body of the mobile phone, in the groove of the sealing member and then connecting the housing of the connector assembly to the lower casing by bolts such that the contact terminal and the earth terminal insert-molded in the housing are brought into contact with a pressure-type connection terminal of the PCB connector; and a fourth process of assembling upper and lower casings by inserting a protrusion part of the upper casing formed in the connector mounting part of the main body of the mobile phone, in the groove of the sealing member.

In accordance with another aspect of the present invention, there is provided a waterproofing structure for a mobile phone, including a connector assembly constituted by a housing including a contact terminal and an earth terminal insert-molded therein and a sealing member connection groove formed at the outside thereof, a sealing member mounted in the sealing member connection groove, and a shell connected at the front of the housing; a PCB equipped with a PCB connector having a plurality of pressure-type connection terminals for connection with the contact terminal and mounted to a lower casing; a pair of mounting part each formed at both sides of the housing of the connector assembly to fixedly fasten the connector assembly to the lower casing together with the PCB; and a pair airtight protrusion parts each provided at the upper casing and the lower casing corresponding to each other to closely connected with the outside of the sealing member.

In accordance with still another aspect of the present invention, there is provided a waterproofing method for a mobile phone, including a first process of constructing a connector assembly, by inserting a sealing member including a groove formed along an outer circumference thereof, in an outside of a housing that includes a shell connected at the front thereof and a contact terminal and an earth terminal insert-molded therein; a second process of fastening a printed circuit board (PCB) equipped with a pattern-type connection terminal at an upper surface thereof to a lower casing by bolts; a third process of inserting a protrusion part of the lower casing, being formed in a connector mounting part of a main body of the mobile phone, in the groove of the sealing member and then connecting the housing of the connector assembly to the lower casing by bolts such that the contact terminal and the earth terminal insert-molded in the housing are elastically brought into contact with the pattern-type connection terminal; and a fourth process of assembling upper and lower casings by inserting a protrusion part of the upper casing formed in the connector mounting part of the main body of the mobile phone, in the groove of the sealing member.

In the third process, the housing may be guided to a mounting position at the PCB and connected to the lower casing by bolts.

In accordance with still another aspect of the present invention, there is provided a waterproofing structure for a mobile phone, including a connector assembly constituted by a housing including a contact terminal formed with an elastic supporting part at a rear end and an earth terminal which are insert-molded therein and a sealing member connection groove, a sealing member mounted in the sealing member connection groove, and a shell connected at the front of the housing; a PCB equipped with a plurality of pattern-type connection terminals for connection with the contact terminal and the earth terminal, and mounted to a lower casing; a pair of mounting part each formed at both sides of the housing of the connector assembly to fixedly fasten the connector assembly to the lower casing together with the PCB; and a pair airtight protrusion parts each provided at the upper casing and the lower casing corresponding to each other to closely connected with the outside of the sealing member.

The housing may include a pair of housing legs formed backward on both sides of the housing, and a pair of cut slits are formed at the PCB corresponding to the housing legs, such that the housing legs are guided by the cut slits.

The housing legs may be supported by a pair of reinforcing pieces formed on both sides of the shell.

The sealing member may further include an airtight groove part for inserting the airtight protrusion part formed at the upper and lower casings, and the upper and lower casings each further include front and rear recess parts formed at the front and the rear of the airtight protrusion part to insert therein the front and rear protrusion parts of the sealing member, respectively, which are defined by the airtight protrusion part.

In accordance with still another aspect of the present invention, there is provided a waterproofing method for a mobile phone, including a first process of molding a main body of the mobile phone to include a casing main body opened upward and formed with a connector insertion hole at one side thereof, and a casing cover equipped to the casing main body; a second process of constructing a connector assembly by inserting a sealing member in the outside of a housing which includes a shell connected at the front thereof and a contact terminal and an earth terminal insert-molded therein; a third process of inserting the connector assembly in the connector insertion hole of the casing main body, and then inserting the PCB in the rear part of the housing, which is protruded inwardly from the casing main body, such that the contact terminal and the earth terminal are elastically brought into contact with the pattern-type connection terminal formed at the lower surface of the PCB, while simultaneously connecting the PCB to the casing main body by bolts; and a fourth process of connecting the casing cover to the open upper side of the casing main body.

In accordance with still another aspect of the present invention, there is provided a waterproofing structure for a mobile phone, including a casing main body including a casing cover connected at an opened upper side thereof and a connector insertion hole formed at one side thereof; a connector assembly inserted in a connector insertion hole formed on the casing main body, including a housing in which a contact terminal and an earth terminal are insert-molded, a sealing member mounted to the outside of the housing, and a shell connected to the front of the connector assembly; and a PCB formed with a pattern-type connection terminal formed on a bottom surface thereof for contact with the contact terminal and the earth terminal of the housing, fixedly fastened to a fixing boss formed inside the casing main body, and fitted with the rear part of the housing.

A pair of backward protrusion parts may be formed at the rear part of the housing and locking hooks are integrally formed with upper parts of the backward protrusion parts to have elasticity by existence of a cut recess, whereas fixing holes for inserting the locking hooks are formed at the PCB, such that the housing and the PCB can be connected to each other through the locking hooks and the fixing holes.

The casing main body may include a connector lower part supporter integrally formed with a rear lower part of the connector insertion hole, and the connector lower part supporter further includes a connector fixing rib formed at an upper surface thereof for engagement with a connector fixing recess formed at a lower surface of the backward protrusion part of the housing, and a sliding prevention stopper supporting an end of the backward protrusion part.

The housing may include a pair of arms integrally formed at both front sides thereof, the arms each including a movement prevention protrusion formed at upper and lower sides and one lateral side, and the shell includes a pair of fixing pieces integrally formed with both rear sides thereof and inserted in mounting holes formed at both front sides of the housing, the fixing pieces each including a fixing protrusion at a lower part thereof.

The sealing member connection groove of the housing may include at least two airtight annular protrusions while the sealing member includes airtight annular grooves formed on an inner surface thereof to insert the airtight annular protrusions, and an outside of the sealing member is sectioned by an annular groove so that the sealing member has a double airtight structure.

The above and other objects, features and other advantages of the present invention will be more clearly understood from the following detailed description taken in conjunction with the accompanying drawings, in which:
FIG. 1a and FIG. 1b are a perspective view and a sectional view showing a conventional connector cover structure of a mobile phone;
FIG. 2 to FIG. 4B illustrate a waterproofing structure for a mobile phone, according to a first embodiment of the present invention;

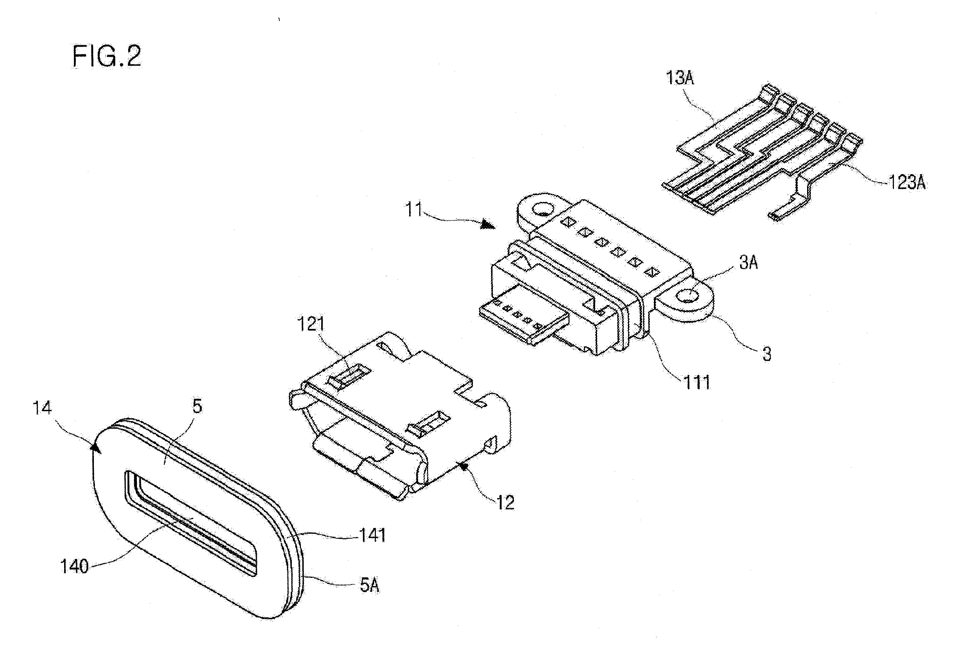

FIG. 2 is an exploded perspective view of a connector assembly;

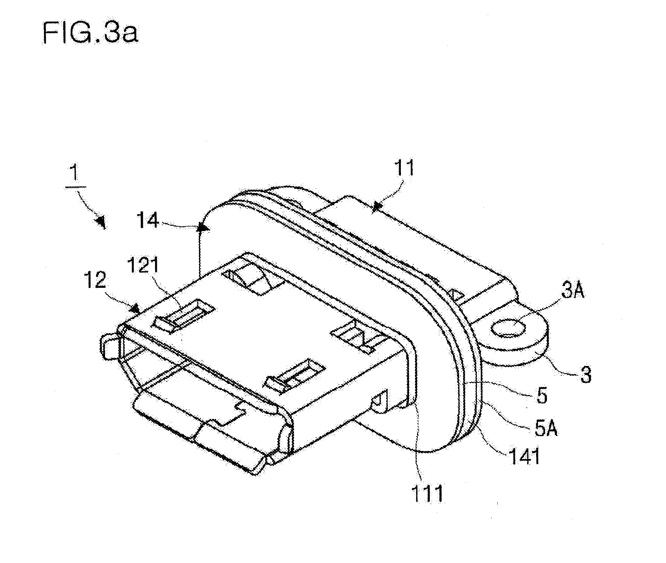

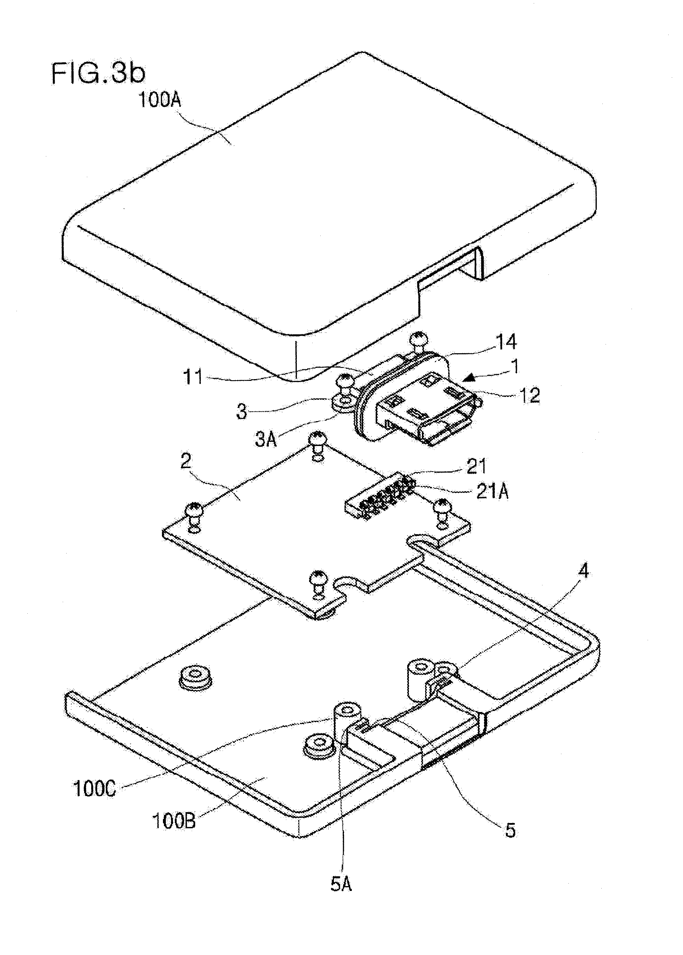

FIG. 3A and FIG. 3B are front and rear perspective views, respectively, showing an assembled state of the connector assembly shown in FIG. 2;

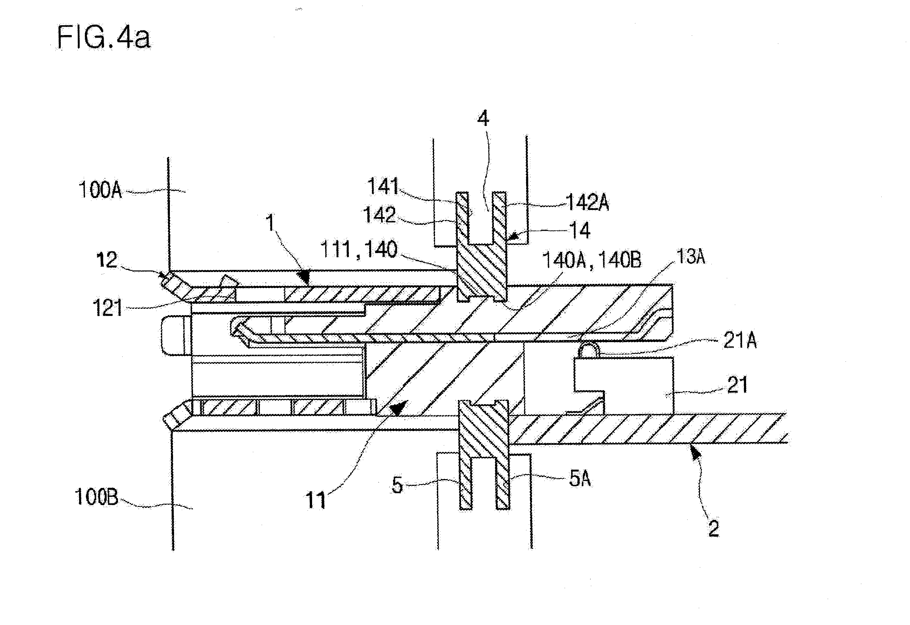

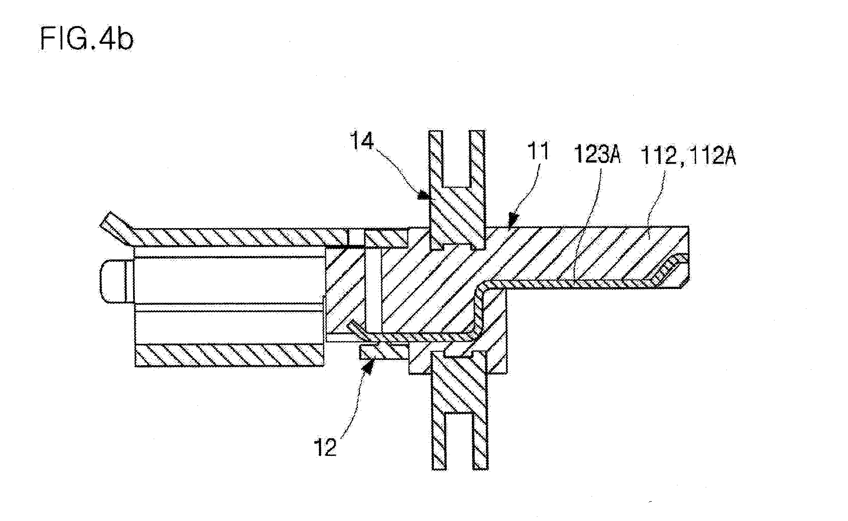

FIG. 4A and FIG. 4B show the assembled state of the connector assembly of FIG. 2, more specifically;
FIG. 4A is a sectional view showing a connection state of a contact terminal;
FIG. 4B is a sectional view showing an inserted state of an earth terminal;

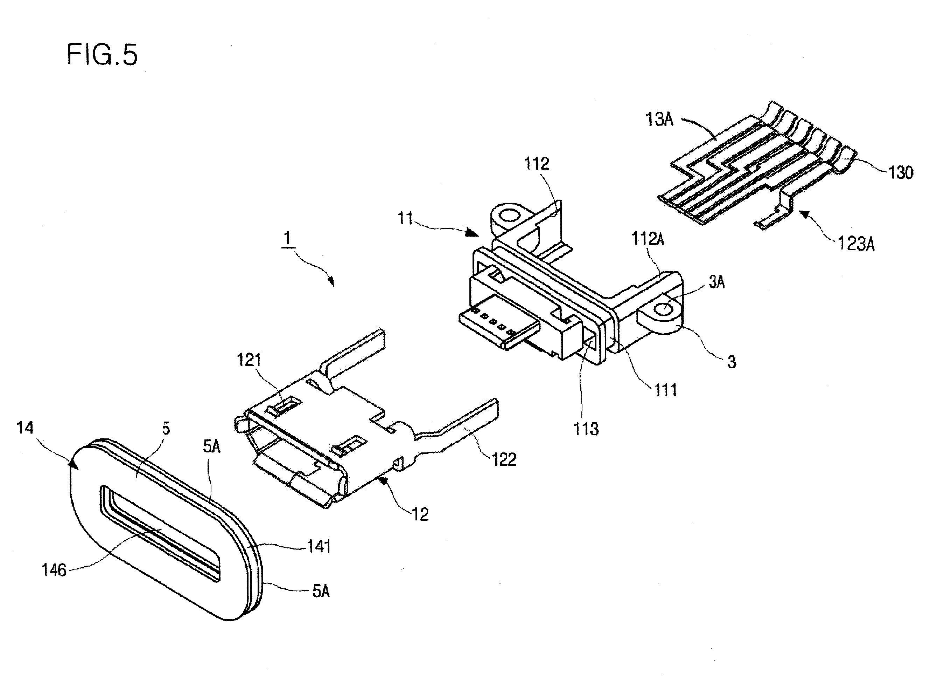

FIG. 5 to FIG. 7b illustrate a waterproofing structure for a mobile phone according to a second embodiment of the present invention,
FIG. 5 is an exploded view of a connector assembly;

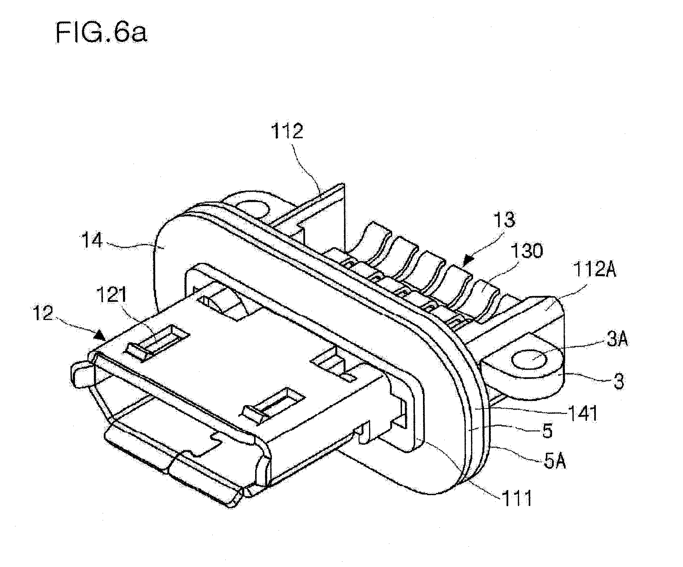

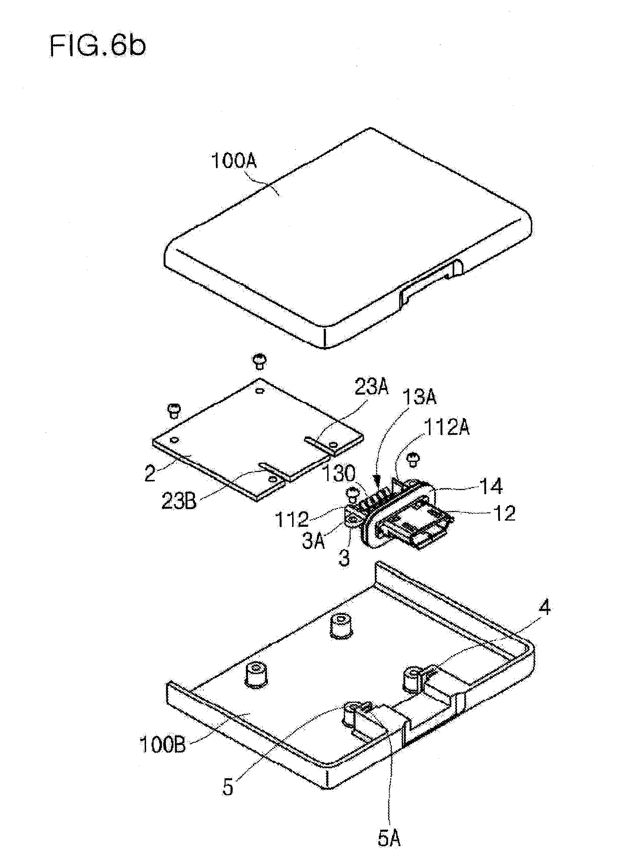

FIG. 6a and FIG. 6b are front and rear perspective views, respectively, showing an assembled state of the connector assembly shown in FIG. 5;

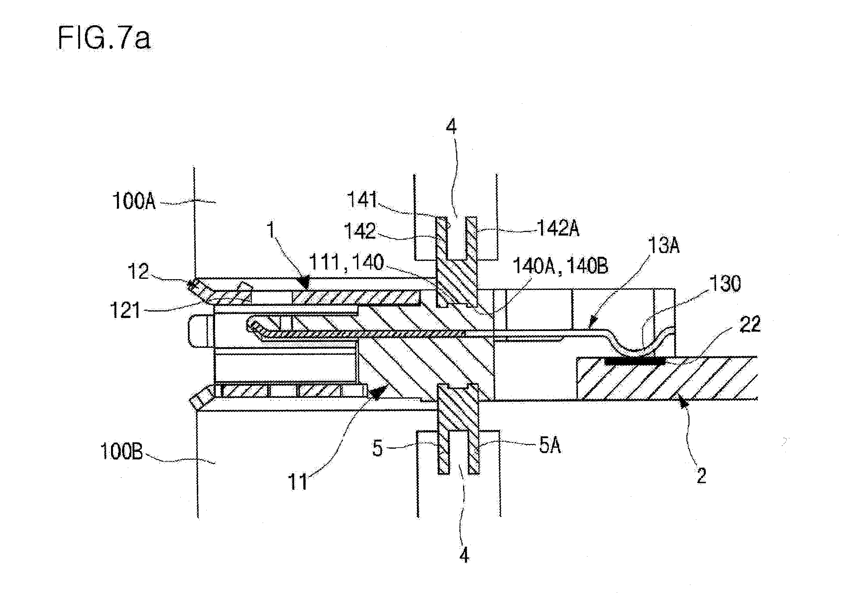

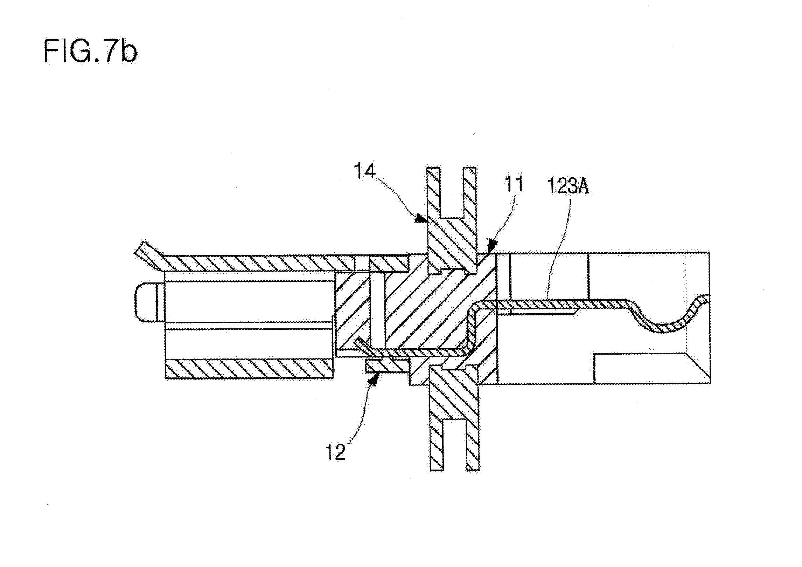

FIG. 7a and FIG. 7b show the assembled state of the connector assembly of FIG. 5, more specifically;
FIG. 7a is a sectional view showing a connection state of a contact terminal;
FIG. 7b is a sectional view showing an inserted state of an earth terminal;

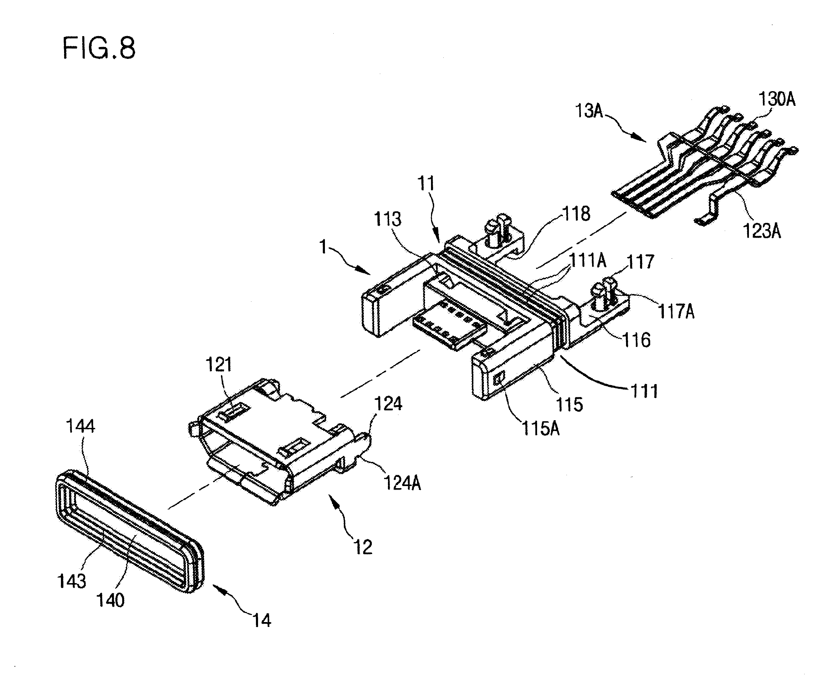

FIG. 8 to FIG. 12 illustrate a waterproofing structure for a mobile phone according to a third embodiment of the present invention,
FIG. 8 is an exploded view of a connector assembly;

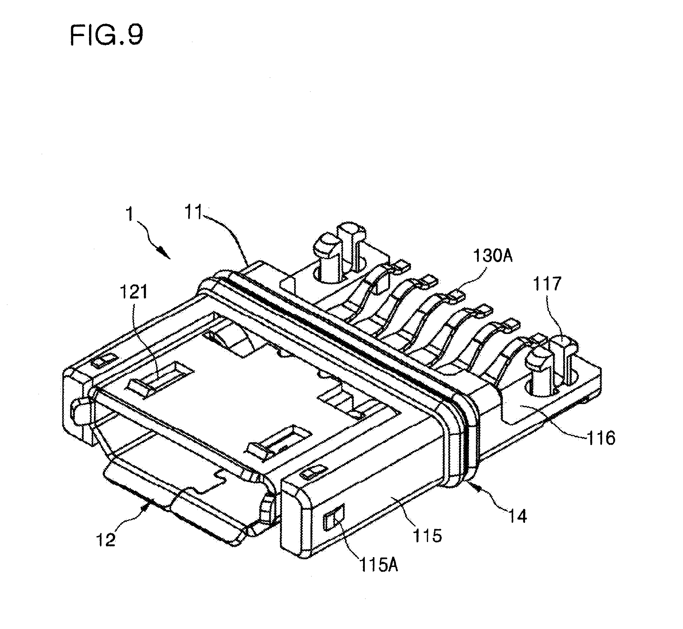

FIG. 9 is a perspective view showing an assembled state of the connector assembly;

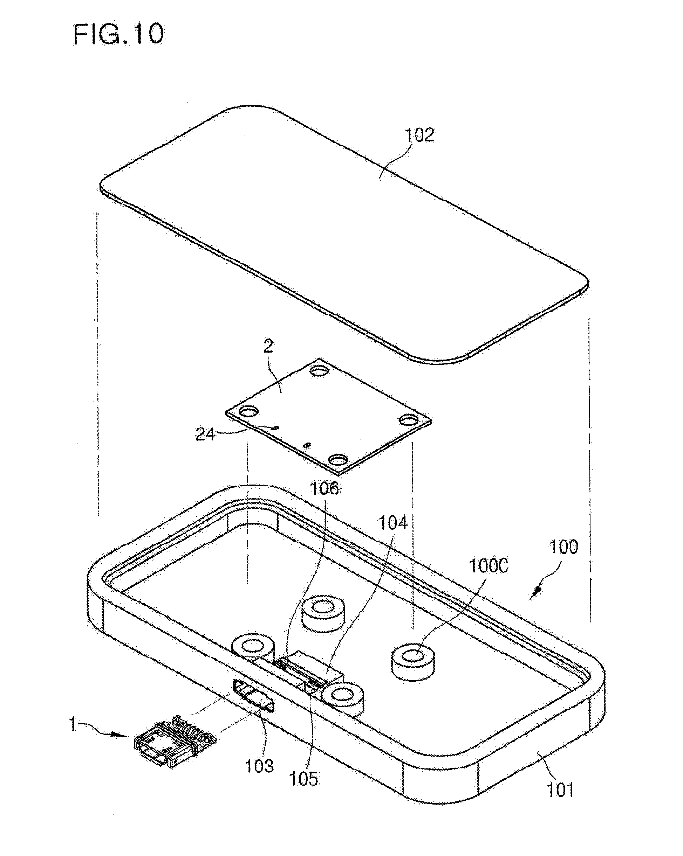

FIG. 10 is an exploded perspective view showing the structure of a main body of the mobile phone;

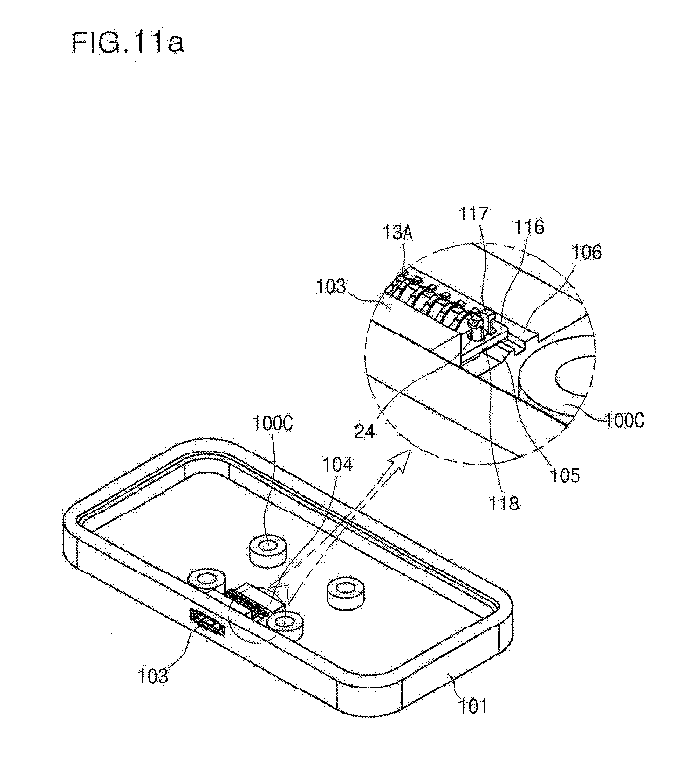

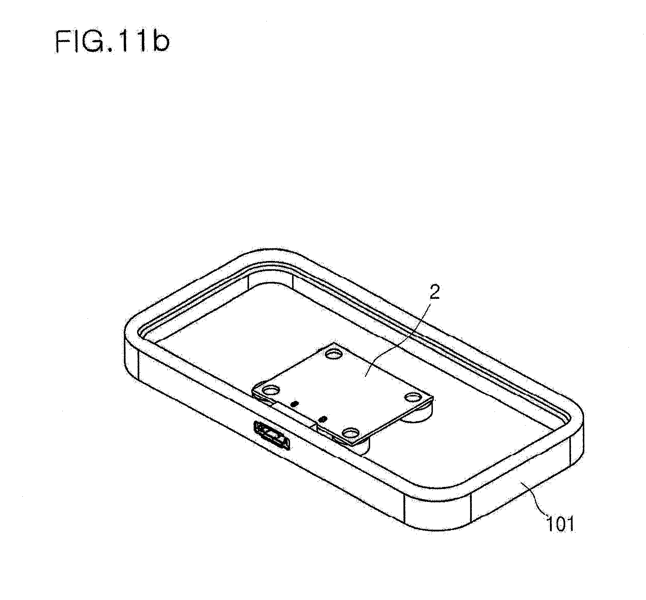

FIG. 11a and FIG. 11b are perspective views showing constructing processes of the waterproof structure according to the third embodiment of the present invention;

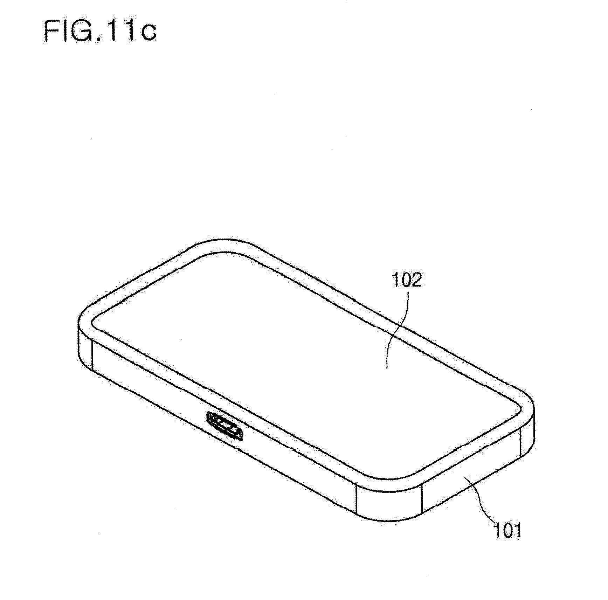

FIG 11c is a perspective view showing the main body shown in FIG 10 in its assembled state; and

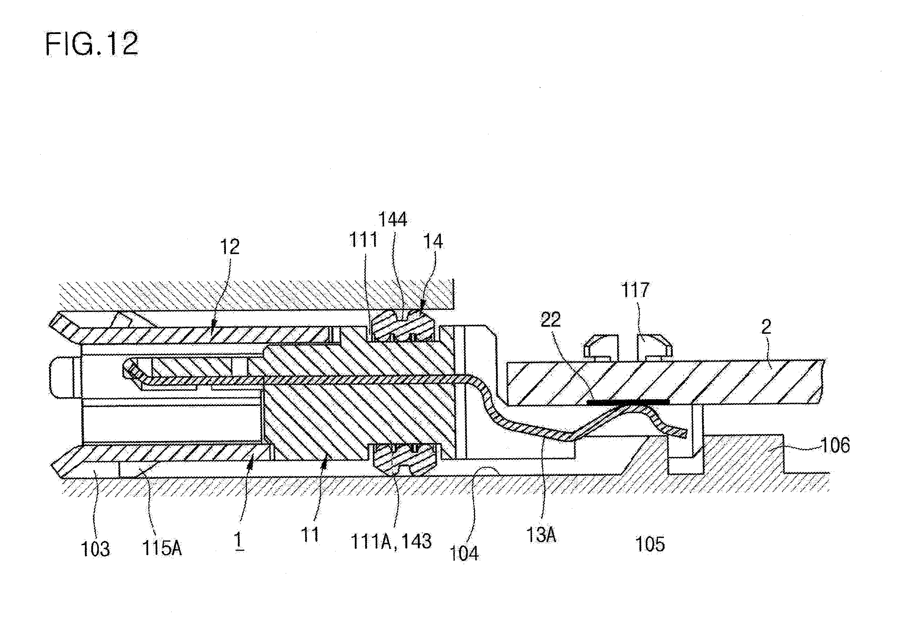

FIG. 12 is a sectional view showing the waterproof structure according to the third embodiment of the present invention in its assembled state.

Hereinafter, exemplary embodiments of the present invention will be described in detail with reference to the accompanying drawings. It is noted that various modified configurations of the embodiments can be included in the scope of the present invention. The following description is provided to explain the present invention more fully. Elements of the embodiments may not necessarily be shown to scale in the drawings.

Referring to FIG. 2 to FIG. 4, illustrating a waterproof structure for a mobile phone according to a first embodiment of the present invention, a recharging connector of the mobile phone comprises a housing 11 made of resin, including a contact terminal 13 integrally formed by injection molding, and a shell 12 connected to the front of the housing 11, thereby constituting a connector assembly 1.

In the above structured recharging connector, according to the first embodiment of the present invention, a sealing member 14 is mounted at the outside of the housing 11 as shown in FIG. 2. Therefore, as upper and lower casings 100A and 100B are assembled into a telephone main body, the upper and lower casings 100A and 100B are connected with the sealing member 14 and closely surround the outside of the sealing member 14 as shown in FIG. 3b.

For this structure, the housing 11 includes a sealing member accommodating groove 111 for mounting the sealing member 14 therein, as shown in FIG. 2. The sealing member 14 includes a penetration hole 140 for engagement with the sealing member connection groove 111 of the housing 11, and an airtight groove part 141 formed around an outer circumference thereof into which the upper and lower casings 100A and 100B are inserted. A front protrusion part 142 and a rear protrusion part 142A of the sealing member 14 define the airtight groove part 141.

Referring to FIG. 3b, a pair of airtight protrusion parts 4 each formed on the upper casing 100A and the lower casing 100B and corresponding to each other are closely insertable into the airtight groove part 141 of the sealing member 14. At the front and the rear of each airtight protrusion part 4, front and rear recess parts 5 and 5A are formed into which the front protrusion part 142 and the rear protrusion part 142A are respectively inserted.

In addition, the sealing member connection groove 111 formed in the housing 11 can be engaged airtightly with the penetration hole 140 of the sealing member 14. This is achieved by engagement between a recess 140A in the sealing member connection groove 111 and a protrusion 140B formed on an inside of the penetration hole 140 of the sealing member 14, as shown in FIG. 4a.

The shell 12 includes the pair of fixing holes 121 at the upper part thereof into which hooks of a connector (not shown) of recharging connector are fixed. In case of entry of water in prior art devices, the water enters through the fixing holes, the housing and the gap between the upper and lower casings 100A and 100B, and reaches the printed circuit board (PCB) mounted in the main body, thereby causing serious damage to the circuit structure of the mobile phone.

However, according to the invention an airtight structure is achieved as a result of assembling the sealing member 14 and the upper and lower casings 100A and 100B. Accordingly any water that enters the recharging connector 200 can be prevented by the sealing member 14 from further entering into the main body through the fixing holes 121.

The present invention is also **characterized in that** the contact terminal 13 of the recharging connector 200 can be connected to the PCB without requiring a soldering process. Referring to FIG. 3b, a PCB connector 21 is provided on the PCB 2. The PCB connector 21 includes a plurality of pressure-type connection terminals 21A, one end of each of which is curved in an arc shape so as to have elasticity in an up and down direction, perpendicular to the board, as shown in FIG. 4a.

With the above structure, the connector assembly 1 is constructed in such a manner that a fastening hole 3A of a mounting part 3 formed at each side of the housing 11 corresponds to a fixing boss 100C formed on the lower casing 100B. The connector assembly 1 and lower casing 100B, together with the PCB, are fastened together using screws, as shown in FIG. 3b.

As the connector assembly 1 is assembled, each pressure-type connection terminal 21A of the PCB connector 21 is compressed by a contact terminal 13A or an earth terminal 123A which terminals are insert-molded in the housing 11 as shown in FIG. 4a. This achieves connection between the connection terminals 21A and the terminals 13A and 123A. A leading end of the earth terminal 123A performs an earthing function through contact with a lower inner surface of the shell 12 as shown in FIG. 4b. Since the earth terminal 123A is insert-molded into the housing 11, any water in the connector is prevented from bypassing the housing 11 and coming into contact with the PCB 2.

The waterproofing structure according to the first embodiment of the present invention is capable of preventing the ingress of water as a result of the assembly process explained below with reference to the accompanying drawings.

Firstly, the sealing member 14 has the airtight groove part 141 along its outer circumference and is fitted around the outside of the housing 11 which is connected with the shell 12 at the front of the housing 11. The contact terminals 13A and the earth terminal 123A are insert moulded in the housing 11. Together these parts constitute the connector assembly 1. More particularly, the housing 11 connected with the shell 12 is positioned in the penetration hole 140 of the sealing member 14, and the sealing member 14 is fitted into the sealing member connection groove 111 of the housing 11.

Secondly the PCB 2 equipped with the PCB connector 21 on the upper surface thereof is fastened to the lower casing 100B by bolts. The PCB connector includes the pressure-type connection terminal 21A which protrude upwardly therefrom. The PCB 2 is fastened to the lower casing 100B using bolts, as shown in FIG. 3b.

Thirdly the connector assembly 1 is connected with the lower casing 100B. The airtight protrusion part 4 of the lower casing 100B of the housing 11 is inserted into the airtight groove part 141 of the sealing member 14. The front and rear protrusion parts 142 and 142A of the sealing member 14 are inserted respectively into the front and rear recess parts 5 and 5A formed in the lower casing 100B. Next, the housing 11 is fastened to the fixing bosses 100C of the lower casing 100B by fasteners inserted through the fastening holes 3A formed at the mounting part 3 of the housing 1. At this stage, the contact terminals 13A and the earth terminal 123A, formed as part of the housing 11, are brought into contact with the pressure-type connection terminals 21A of the PCB connector 21 of the PCB 2, as shown in FIG. 3b and FIG. 4b.

Fourthly the upper casing 100A and the lower casing 100B are connected to each other. In the same manner as in the third stage, the airtight protrusion part 4 of the upper casing 100A of the housing 11 is inserted into the airtight groove part 141 of the sealing member 14. Additionally, the front and rear protrusion parts 142 and 142A of the sealing member 14 are inserted respectively into the front and rear recess parts 5 and 5A formed in the upper casing 100A. In this state, the upper and lower casings 100A and 100B are connected to each other as shown in FIG. 3b and FIG. 4b.

FIG. 5 to FIG. 7b illustrate a waterproofing structure according to a second embodiment of the present invention. FIG. 5 is an exploded perspective view showing the connector assembly 1.

In this embodiment, as shown in FIG.7a, when the connector assembly 1 is mounted to the PCB, the connector assembly 1 is guided to a mounting position relative to the PCB in a sliding manner. Accordingly, even in a case where the connection terminals of the PCB are simply formed as a pattern on the PCB rather than as a separate part, the contact terminals 13A and the earth terminal 123A of the connector assembly 1 can be brought into close contact with the pattern-type connection terminals 22.

As shown in FIG. 5, a pair of housing legs 112 and 112A are formed on both sides of the housing 11 and project backwardly therefrom. The housing legs 112 and 112A are guided into a mounting position relative to the PCB 2 by cut slits 23A and 23B formed therein as shown in FIG. 6b. Consequently, convenience and speed of the assembling process can be improved. Also, the housing legs 112 and 112A are supported by reinforcing pieces 122 formed at opposite sides of the shell 12. The reinforcing pieces 122 are inserted into mounting holes 113 of the housing 11 such that the housing legs 112 and 112A are reinforced and strengthened.

Furthermore, as shown in FIG. 5 and FIG. 6a, the rear end of the contact terminal 13 of the connector assembly 1 is configured as an elastic supporting part 130 with a downwardly curved spring portion so that the terminal 13 exerts an elastic downward force on the connection terminals. Accordingly, close contact and connection between the contact terminals 13A of the recharging connector and the pattern-type connection terminal 22 of the PCB 2 can be achieved without having to providing the PCB 2 with a dedicated connector. Technical features related to earthing will not be explained in detail again. These features are shown in FIG. 7A and FIG. 7b. The structure according to the second embodiment is capable of preventing the ingress of water as a result of the assembly process explained below with reference to the accompanying drawings.

The sealing member 14 has the airtight groove part 141 along its outer circumference and is fitted around the outside of the housing 11 which is connected with the shell 12 at the front of the housing 11. The contact terminals 13A and the earth terminal 123A are insert moulded in the housing. Together these parts constitute the connector assembly 1. More particularly, the housing 11 connected with the shell 12 is positioned in the penetration hole 140 of the sealing member 14, and the sealing member 14 is fitted into the sealing member connection groove 111 of the housing 11. Additionally, the reinforcing pieces 122 of the shell 12 are inserted into the mounting holes 113 of the housing 11 as shown in FIG. 5 and FIG. 6a.

Secondly the PCB 2 with the pattern-type connection terminals 22 formed on its upper surface is fastened to the lower casing 100B by bolts. The PCB 2 includes the cut slits 23A and 23B as shown in FIG. 6B.

Thirdly the connector assembly 1 is connected to the lower casing 100B. More specifically, the airtight protrusion part 4 of the lower casing 100B of the housing 11 is inserted into the airtight groove part 141 of the sealing member 14. The front and rear protrusion parts 142 and 142A of the sealing member 14 are inserted respectively into the front and rear recess parts 5 and 5A formed in the lower casing 100B.

Next, the housing 11, together with the PCB 2, is fastened to the lower casing 100B by means of fasteners which extend through the fastening holes 3A formed at the mounting part 3 of the housing 1. The housing legs 112 and 112A of the housing 11 are inserted into the cut slits 23A and 23B formed in the PCB 2 and slidingly guide it to its mounting position with respect to the PCB 2.

In addition, the elastic supporting part 130 of the contact terminals 13A and the earth terminal 123A mounted in the housing 11 are brought into elastic contact with the pattern-type connection terminals 22 formed on the upper surface of the PCB 2 as shown in FIG. 6b and FIG. 7a.

Fourthly the upper and lower casings 100A and 100B are connected to each other. In the same manner as explained above, the airtight protrusion part 4 of the upper casing 100A is inserted into the airtight groove part 141 of the sealing member 14 mounted on the housing 11. Additionally, the front and rear protrusion parts 142 and 142A of the sealing member 14 are inserted respectively into the front and rear recess parts 5 and 5A formed in the upper casing 100A. In this state, the upper and lower casings 100A and 100B are connected to each other as shown in FIG. 7a and FIG. 7b.

FIG. 8 to FIG. 12 illustrate a waterproofing structure according to a third embodiment of the present invention. FIG. 8 is an exploded perspective view of the structure.

Referring to FIG. 8, in the same manner as in the first and the second embodiments, the waterproofing structure comprises the housing 11, the shell 12 and the sealing member 14. The housing 11 includes the contact terminal 13A having an elastic contacting part 130A formed with an upward curve and an earth terminal 123A. The terminals are formed integrally with the housing 11 by insert injection molding. Pairs of parallel arms 115 and backwardly protruding parts 116 are integrally formed with front and rear parts of the housing 11, respectively. Furthermore, a locking hook 117 is integrally formed with each of the backwardly protruding parts 116. The locking hook 117 is elastic due to an upwardly open recess 117A formed therein. Each backwardly protruding part 116 further includes a connector fixing recess 118 formed at a lower part thereof.

The sealing member connection groove 111 is formed in the housing 11 between the arms 115 and the backwardly protruding parts 116. The sealing member connection groove 111 comprises at least two airtight annular protrusions 111A. The arms 115 each include movement prevention protrusions 115A formed at upper and lower sides and one lateral side thereof. Additionally, a pair of the mounting holes 113 are formed respectively on both sides of the front of the housing 11, adjacent to the arms 115.

The shell 12 includes the fixing holes 121 each formed on the upper surface thereof, and a pair of the fixing pieces 124 formed at both rear sides thereof to be inserted in the mounting holes 113 of the housing 11. The fixing piece 124 is formed with a fixing protrusion 124A at a lower end thereof.

The sealing member 14 includes the penetration hole 140 formed in the center, and also includes an airtight annular groove 143 formed on an inner surface thereof into which the airtight annular protrusion 111A of the housing 11 fits. Additionally, an annular groove 144 is formed at an outer surface of the sealing member 14, which divides the sealing member 14 into front and rear parts. Thus, the sealing member 14 is configured forms a double airtight structure.

FIG. 9 is a perspective view of a connector assembly according to the third embodiment of the present invention.

As shown in FIG. 9, the contact terminal 13A and the earth terminal 123A are integrally formed with the housing 11 by injection molding. The shell 12 is connected to the housing 11 by inserting the fixing pieces 124 into the mounting holes 113 of the housing 11. The sealing member 14 is then fitted to the connection groove 111 of the housing 11 completing construction of the connector assembly 1.

A main body 100 of the mobile phone according to the third embodiment, as shown in FIG. 10, comprises a casing main body 101 opened upward and a casing cover 102 connected to an opened side of the casing main body 101. At one side of the casing main body 101, a connector insertion hole 103 is formed through which the connector assembly 1 is inserted, so that the connector assembly 1 extends inwardly into the casing main body 101.

A connector lower part supporter 104 is formed at a rear lower part of the connector insertion hole 103 in the casing main body 101, and is integrally formed with the inside of the casing main body 101. The connector lower part supporter 104 includes a connector fixing rib 105 and a sliding prevention stopper 106 formed on an upper surface thereof. In addition, on a bottom surface of the casing main body 101, a fixing boss 100C is integrally formed for mounting the PCB 2 by means of a bolt connection.

The PCB 2 includes fixing holes 24 into which the locking hooks 117 formed on the backwardly protruding parts 116 of the housing 11 are inserted.

The above-described third embodiment of the present invention is capable of preventing ingress of water. The method of assembling the third embodiment will be described in detail with reference to FIG. 9 to FIG. 11c.

Firstly the main body 100 of the mobile phone is molded including the upwardly open casing main body 101, including the connector insertion hole 103 at one side thereof, and the casing cover 102 configured to cover the casing main body 101, as shown in FIG. 10.

Secondly as shown in FIG. 9, the housing 11 with the contact terminals 13A and the earth terminal 123A, is connected with the shell 12 at the front thereof. In this step the fixing pieces 124 of the shell 12 are inserted into the mounting holes 113 of the housing 11 and then fixed there by the fixing protrusion 124A. Next, the sealing member 14 is mounted in the sealing member connection groove 111 of the housing 11, by situating the housing 11 in the penetration hole 140. As this occurs the airtight annular protrusion 111A of the sealing member connection groove 111 is inserted into the airtight annular groove 143 formed on the inner surface of the sealing member 14.

Thirdly the connector assembly 1 is inserted into the connector insertion hole 103 of the casing main body 101 as shown in FIG. 11A. After that, the PCB 2 is inserted in the rear part of the housing 11 which protrudes inwardly into the casing main body 101, such that the contact terminals 13A and the earth terminal 123A are elastically brought into contact with the pattern-type connection terminals 22 formed at the lower surface of the PCB 2. Simultaneously, the PCB 2 is connected to the casing main body 101 by bolts.

More specifically, the connector assembly 1 is first inserted into the connector insertion hole 103 of the connector main body 101. Here, since an outer circumference of the sealing member 14 connected to the housing 1 is greater than an inner circumference of the connector insertion hole 103, the connector assembly 1 is forcedly fitted into the connection insertion hole 103. In addition, as the movement prevention protrusion 115A of the arm 115 is brought into contact with an inner wall of the connector insertion hole 103, the housing 11 can be prevented from moving relative to the main body 101.

A connector fixing recess 118 formed at the lower part of the backwardly protruding part 116 of the housing 11 is engaged with a connector fixing rib 105 formed on the connector lower part supporter 104 within the casing main body 101. An end of the backward protrusion part 116 is caught by a sliding prevention stopper 106 disposed near the rear part of the connector fixing rib 105, thereby preventing the connector assembly 1 from being inserted or slid too far through the connector insertion hole 103.

Furthermore, after the connector assembly 1 has been inserted into the connector insertion hole 103 of the casing main body 101, the fixing hole 24 formed in the PCB 2 is engaged with a locking hook 117 of the backwardly protruding part 116 of the connector assembly 1. Each locking hook 117 has elasticity due to the existence of a cut recess 117A, it is temporarily compressed at the beginning of its insertion into the fixing hole 24 and then resiles to its initial state. Accordingly connection between the PCB 2 and the connector assembly 1 is achieved.

Fourthly as shown in FIG. 11c, the casing cover 102 is connected to the open side of the casing main body 101, thereby shielding the inside of the casing main body 101 from the outside. A general sealing material (not shown) may be interposed for connection between the casing main body 101 and the casing cover 102. Accordingly, airtightness between the casing main body 101 and the casing cover 102 can be achieved.

As described above, according to the third embodiment of the present invention, the main body 100 of the mobile phone comprises the casing main body 101 having an open upper side, and the casing cover 102. Also, by providing the connector insertion hole 103 at one side of the casing main body 101, the connector assembly 1 can be connected through the connector insertion hole 103. Therefore, although the first and the second embodiments of the present invention may allow entry of water through the gap between the upper and lower casings because the main body 100 comprises separable upper and lower casings, the entry of water can be prevented according to the third embodiment.

Moreover, according to the third embodiment of the present invention, the plurality of airtight annular protrusions 111A provided at the sealing member connection groove 111 of the housing 11 are inserted and engaged with the airtight annular grooves 143 formed on the inner surface of the penetration hole 140 of the sealing member 14. As a result, not only airtightness between the housing 11 and the sealing member 14 is guaranteed but also the PCB 2 can be connected to the housing 11 without bolts.

As can be appreciated from the above description, the waterproofing method and structure according to the embodiments of the present invention are capable of preventing damage to an inner circuit structure of a mobile phone by the ingress of water through a recharging connector. The reliability and the quality of the mobile phone is accordingly improved.

In addition, since the contact terminal or terminals of the recharging connector can be connected to a connection terminal of a PCB without soldering, the rubber sealing member provided for waterproofing purposes will not be deformed or damaged by heat generated from the soldering.

According to the embodiments of the present invention, even when the connection terminal of the PCB is formed simply as a pattern on the PCB rather than as a separate part, the contact terminal of the recharging connector can be closely connected with the PCB. Therefore, the structure can be simplified.

Since the recharging connector, in the form of a connector assembly, can be guided to a mounting position at the PCB in a sliding manner, the assembly process can be quick and convenient, which improves productivity.

By omitting an earth terminal from a shell and by incorporating the earth terminal in a housing along with the contact terminal, loss of a waterproofing effected by a sealing member resulting from an earth terminal being disposed ahead of the sealing member as in conventional structures can be prevented.

The main body according to the embodiments of the present invention is constituted by a casing main body and a casing cover, and a connector insertion hole is formed in the casing main body. Accordingly entry of water occurring in conventional mobile phones in which the main body comprises separable upper and lower casings can be prevented.

In addition, a plurality of airtight annular protrusions are formed at a sealing member connection groove of the housing which are engaged with corresponding airtight annular grooves. Accordingly, not only can a waterproof effect can be obtained but also the PCB can be connected to the housing without bolts. As a result, convenience of the assembly process can be enhanced.

Although the preferred embodiments of the present invention have been disclosed for illustrative purposes, those skilled in the art will appreciate that various modifications, additions and substitutions are possible, without departing from the scope of the invention as defined in the accompanying claims.

## Claims

1. A waterproofing method for a mobile phone, comprising:
a first process of constructing a connector assembly (1), by arranging a sealing member (14), including a groove (141) formed along an outer circumference thereof, around an outside of a housing (11) that includes a shell (12) connected to a front thereof, the housing (11) also including a contact terminal (13A) and an earth terminal (123A) insert-molded therein;
a second process of fastening a printed circuit board (PCB) (2) equipped with a PCB connector (21) at an upper surface thereof to a lower casing (100B) by bolts;
a third process of inserting a protrusion part (4) of the lower casing (100B), which is formed in a connector mounting part of a main body (100A, 100B) of the mobile phone, into the groove (141) of the sealing member (14) and then connecting the housing (11) of the connector assembly (1) to the lower casing (100B) by bolts such that the contact terminal (13A) and the earth terminal (123A) are brought into contact with respective pressure-type connection terminals (21A) of the PCB connector (21); and
a fourth process of assembling upper (100A) and lower (100B) casings by inserting a protrusion part (4) of the upper casing (100A), formed in the connector mounting part of the main body (100A, 100B) of the mobile phone, into the groove (141) of the sealing member (14).

2. A waterproofing structure for a mobile phone, comprising:
a connector assembly (1) constituted by a housing (11) including a contact terminal (13A) and an earth terminal (123A) insert-molded therein and a sealing member connection groove (111) formed at an outside of the housing (11), a sealing member (14) mounted in the sealing member connection groove (141), and a shell (12) connected to a front of the housing (11);
a PCB (2) equipped with a PCB connector (21) having a plurality of pressure-type connection terminals (21A) for connection with the contact terminal (13A) and mounted with respect to a lower casing (100B) of the mobile phone;
a pair of mounting parts (3) respectively formed at opposite sides of the housing (11) to fixedly fasten the connector assembly (1) to the lower casing (100B) together with the PCB (2); and
a pair of airtight protrusion parts (4) respectively provided on the lower casing (100B) and a corresponding upper casing (100A) to closely connect with an outside of the sealing member (14).

3. A waterproofing method for a mobile phone, comprising:
a first process of constructing a connector assembly (1), by arranging a sealing member (14) including a groove (141) formed along an outer circumference thereof, around an outside of a housing (11) that includes a shell (12) connected to a front thereof, the housing (11) also including a contact terminal (13A) and an earth terminal (123A) insert-molded therein;
a second process of fastening a printed circuit board (PCB) (2) equipped with a pattern-type connection terminal (22) at an upper surface thereof to a lower casing (100B) by bolts;
a third process of inserting a protrusion part (4) of the lower casing (100B), which is formed in a connector mounting part of a main body (100A, 100B) of the mobile phone, into the groove (14) of the sealing member (14) and then connecting the housing (11) of the connector assembly (1) to the lower casing (100B) by bolts such that the contact terminal (13A) and the earth terminal (123A) are elastically brought into contact with the pattern-type connection terminal (22); and
a fourth process of assembling upper (100A) and lower (100B) casings by inserting a protrusion part (4) of the upper casing (100A), formed in the connector mounting part of the main body (100A, 100B) of the mobile phone, into the groove (141) of the sealing member (14).

4. The waterproofing structure according to claim 3, wherein, in the third process, the housing (11) is guided to a mounting position with respect to the PCB (2) and connected to the lower casing (100B) by bolts.

5. A waterproofing structure for a mobile phone, comprising:
a connector assembly (1) constituted by a housing (11) including a contact terminal (13A) formed with an elastic supporting part (130) at a rear end and an earth terminal (123A) which are insert-molded therein and a sealing member connection groove (111), a sealing member (14) mounted in the sealing member connection groove (111), and a shell (12) connected to a front of the housing (11);
a PCB (2) equipped with a plurality of pattern-type connection terminals (22) for connection with the contact terminal (13A) and the earth terminal (123A), and mounted to a lower casing (100B) of the mobile phone;
a pair of mounting parts (3) respectively formed at opposite sides of the housing (11) of the connector assembly (1) to fixedly fasten the connector assembly (1) to the lower casing (100B) together with the PCB (2); and
a pair of airtight protrusion parts (4) respectively provided on the lower casing (100B) and a corresponding upper casing (100A) to closely connect with an outside of the sealing member (14).

6. The waterproofing structure according to claim 5, wherein the housing (11) includes a pair of housing legs (112, 112A) which extend backwardly on opposite sides of the housing (11), and a pair of cut slits (23A) are formed in the PCB (2) corresponding to the housing legs (112, 112A), such that the housing legs (112, 112A) are guided by the cut slits (23A).

7. The waterproofing structure according to claim 6, wherein the housing legs (112, 112A) are supported by a pair of reinforcing pieces (122) formed on opposite sides of the shell (12).

8. The waterproofing structure according to claim 2, wherein the sealing member (14) further comprises an airtight groove part (141) for engagement with the airtight protrusion parts (4) formed in the upper (100A) and lower (100B) casings, and
the upper (100A) and lower (100B) casings each further comprise inner (5A) and outer (5) recess parts formed respectively inwardly and outwardly of the airtight protrusion part (4) for respective receipt of inner (142A) and outer (142) protrusion parts of the sealing member (14), which are defined by the airtight protrusion part (4).

9. The waterproofing structure according to claim 5, wherein the sealing member (14) further comprises an airtight groove part (141) for receipt of the airtight protrusion parts (4) formed at the upper (100A) and lower (100B) casings, and
the upper (100A) and lower (100B) casings each further comprise inner (5A) and outer (5) recess parts formed respectively inwardly and outwardly of the airtight protrusion part (4) for respective receipt if inner (142A) and outer (142) protrusion parts of the sealing member (14), which are defined by the airtight protrusion part (4).

10. A waterproofing method for a mobile phone, comprising:
a first process of molding a main body (101, 102) of the mobile phone comprising forming an upwardly open casing main body (101) with a connector insertion hole (103) at one side thereof, and forming a casing cover (102) for the casing main body (101);
a second process of constructing a connector assembly (1) by arranging a sealing member (14) around an outside of a housing (11) which includes a shell (12) connected to a front thereof, the housing (11) also including a contact terminal (13A) and an earth terminal (123A) insert-molded therein;
a third process of inserting the connector assembly (1) into the connector insertion hole (103) of the casing main body (101), and then inserting a PCB (2) such that the contact terminal (13A) and the earth terminal (123A) are brought elastically into contact with a pattern-type connection terminal (22) formed at a lower surface of the PCB (2), and connecting the PCB (2) to the casing main body (101) by bolts; and
a fourth process of connecting the casing cover (102) to an open upper side of the casing main body (101).

11. A waterproofing structure for a mobile phone, comprising:
a casing main body (101) including a casing cover (102) connected at an opened upper side thereof and a connector insertion hole (103) formed at one side thereof;
a connector assembly (1) inserted in the connector insertion hole (103) formed in the casing main body (101), including a housing (11) in which a contact terminal (13A) and an earth terminal (123A) are insert-molded, a sealing member (14) mounted to the outside of the housing (11), and a shell (12) connected to a front of the connector assembly (1); and
a PCB (2) formed with a pattern-type connection terminal (22) formed on a bottom surface thereof for contact with the contact terminal (13A) and the earth terminal (123A) of the housing (11), fixedly fastened to a fixing boss (100C) formed inside the casing main body (101), and fitted with a rear part of the housing (11).

12. The waterproofing structure according to claim 11, wherein a pair of backwardly protruding parts (116) are formed at the rear part of the housing (11) and locking hooks (117) are integrally formed with upper parts of the backwardly protruding parts (116), each locking hook (117) having elasticity provided by a cut recess (117A), fixing holes (24) for receiving the locking hooks (117) are formed in the PCB (2), wherein the housing (11) and the PCB (2) can be connected to each other by engagement of the locking hooks (117) in the fixing holes (24).

13. The waterproofing structure according to claim 12, wherein the casing main body (101) includes a connector lower part supporter (104) integrally formed with an inner lower part of the connector insertion hole (103), and
the connector lower part supporter (104) further includes firstly a connector fixing rib (105) formed at an upper surface thereof for engagement with a connector fixing recess (118) formed at a lower surface of the backwardly protruding part (116) of the housing (11), and secondly a sliding prevention stopper (106) supporting an end of the backwardly protruding part (116).

14. The waterproofing structure according to claim 11, 12 or 13 wherein the housing (11) includes a pair of arms (115) integrally formed at opposite front sides thereof, the arms (115) each including a movement prevention protrusion (115A) formed at upper and lower sides and one lateral side, and
the shell (12) includes a pair of fixing pieces (124) integrally formed with opposite rear sides thereof and inserted in mounting holes (113) formed at opposite front sides of the housing (11), the fixing pieces (124) each including a fixing protrusion (124A) at a lower part thereof.

15. The waterproofing structure according to any one of claims 11 to 14 wherein the sealing member connection groove (111) of the housing (11) comprises at least two airtight annular protrusions (111A) and the sealing member (14) comprises airtight annular grooves (143) formed on an inner surface thereof for receipt of the airtight annular protrusions (111A), and
an outside of the sealing member (14) is divided by an annular groove (144) so that the sealing member (14) has a double airtight sealing structure.
